# EUROPEAN PATENT SPECIFICATION

(11) **EP 1 104 724 B1**
(45) Date of publication and mention of the grant of the patent: **18.02.2004**
(21) Application number: 00203922.0
(22) Date of filing: 08.11.2000
(51) Int. Cl.: B60R 21/20

(54) **Mounting arrangement for an airbag module**
Befestigungsanordnung für ein Airbagmodul
Agencement de montage d'un module de coussin gonflable

(30) Priority: 03.12.1999 GB 9928575
(43) Date of publication of application: 06.06.2001
(73) Proprietor: Delphi Technologies, Inc., Troy, MI 48007 (US)
(72) Inventor: Guthke, Detlev W., 42367 Hagen (DE); Nilson, Hans G., 42369 Wuppertal (DE)
(74) Representative: Denton, Michael John

(56) References cited:
- DE-A- 19 622 231
- GB-A- 2 319 751

## Description

### Technical Field

The present invention relates to an airbag module in which the airbag has an extended or longitudinally extending shape, and, in particular, an arrangement for mounting such an airbag module.

### Background of the Invention

Airbag modules having extended or longitudinally extending airbags are known, and are sometimes referred to as side curtains or side airbags. Such airbag modules can be mounted in the roof or door of a motor vehicle adjacent the side of an occupant seat, in general to provide protection for an occupant during a side impact on the vehicle or during roll-over. It is generally a requirement of such airbag modules that the airbag or cushion remains inflated for a longer period of time when compared to the airbags of airbag modules mounted in the dashboard or steering wheel of a motor vehicle. The document GB 2319751 shows an airbag module according to the preamble of claim 1.

### Summary of the Invention

It is an object of the present invention to provide a mounting arrangement for such an airbag module in which the mounting arrangement does not require apertures to be formed in the airbag or curtain.

An airbag module in accordance with the present invention comprises an airbag having an extended profile; a longitudinally extending structural member positioned inside the airbag; and at least two mounting devices for mounting the airbag module in position; each mounting device comprising a first part and a second part; each first part being positioned inside the airbag and having a first portion making a sliding fit on the structural member, and an upstanding portion having a predefined shape; each second part being positioned outside the airbag and having a first portion with a slot of predefined shape for receiving the upstanding portion and a portion of the airbag in a tight fit, and a second portion for mounting the airbag module.

The present invention provides a mounting arrangement for an airbag module which does not require the formation of apertures in the airbag.

### Brief Description of the Drawings

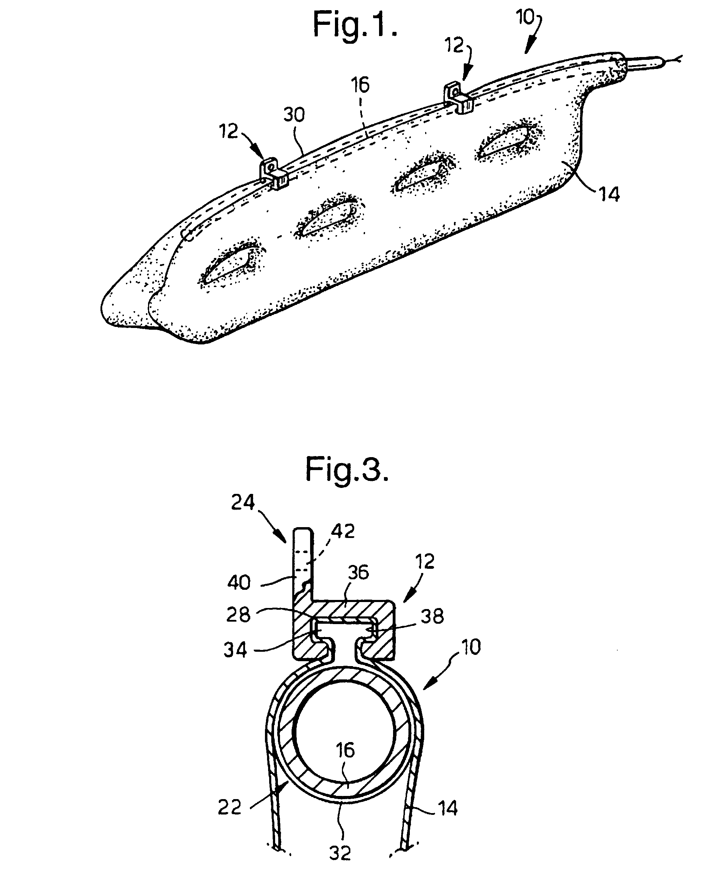

The present invention will now be described, by way of example, with reference to the accompanying drawings, in which:-
Figure 1 is a side view of an airbag module in accordance with the present invention;

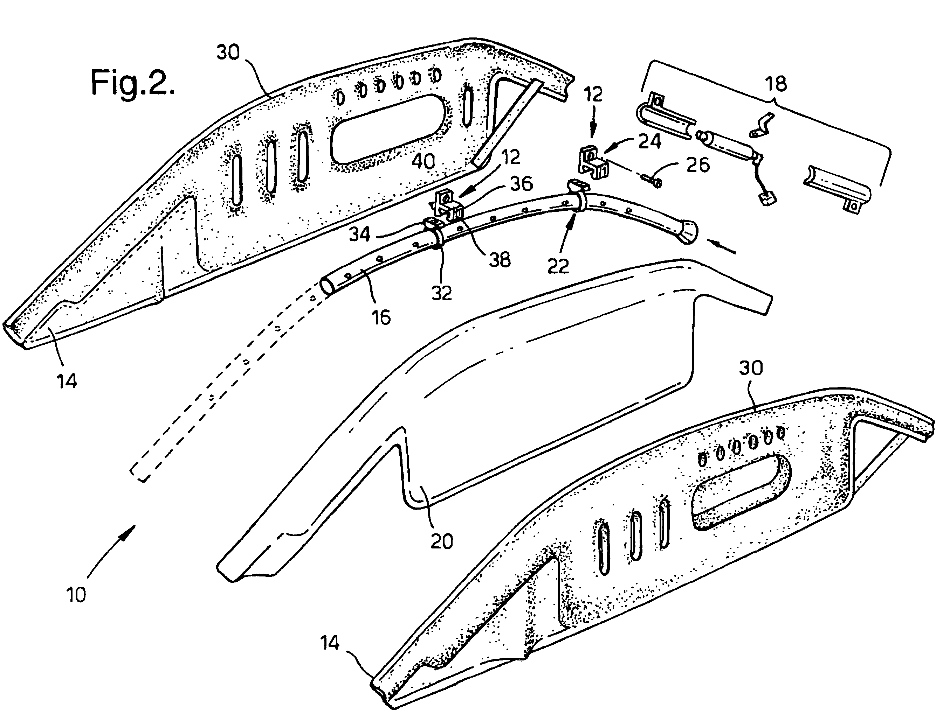

Figure 2 is an exploded view of the airbag module of Figure 1; and
Figure 3 is a cross-sectional view of the mounting device of the airbag module of Figure 1.

### Description of the Preferred Embodiment

Referring to the drawings, the airbag module 10 in accordance with the present invention is for use in a motor vehicle and comprises an airbag or cushion 14 having an extended profile; a longitudinally extending structural member 16; and a pair of mounting devices 12. The structural member 16 is positioned inside the airbag 14. The structural member 16 may be a gas lance or gas diffuser tube which is connected to an inflator 18 for the flow of inflation gas from the inflator into the airbag 14 during deployment of the airbag. In the latter case, the inflator may be secured to the structural member 16 at the position where the structural member enters the airbag 14. A heat shield 20 may be positioned inside the airbag 14.

Each mounting device 12 comprises a first part 22 which is attached to the structural member 16, and a second part 24 which is secured to the motor vehicle, for example, by screws 26 or by a snap-fit. The first and second parts 22,24 are secured together in such a way that a portion 28 of one edge 30 of the airbag 14 is trapped and secured between the first and second parts.

In the preferred arrangement shown in the drawings, the first part 22 of each mounting device 12 comprises a substantially annular portion 32 which makes a sliding fit on the structural member 16, and an upstanding portion 34 which is substantially T-shaped and which is integral with the annular portion. The first part 22 is attached to the structural member 16 inside the airbag 14. The second part 24 of each mounting device 12 comprises a first portion 36 which has a T-shaped slot 38, and a second portion 40 which has an aperture 42 for the screw 26. The T-shaped portion 34 of the first part 22 and the portion 28 of the airbag 14 make a tight fit inside the T-shaped slot 38.

In the present invention, therefore, the airbag 14 of the airbag module 10 can be secured to the motor vehicle without creating apertures in the airbag. Further, the first part 22 of each mounting device 12 can be slid axially along the structural member 16, during mounting of the airbag module 10, to take up any axial tolerances during mounting. Still further, the first part 22 of each mounting device may be rotated relative to the structural member 16 to ensure the correct orientation of the airbag 14.

The annular portion 32 of the first part 22 of each mounting device 12 may be replaced by a C-shaped portion which makes a sliding-fit on the structural member 16. The T-shaped portion 34 and the T-shaped slot 38 may be replaced any another other suitable shapes for these portions. The second portion 40 of the second part 24 may be any suitable mounting portion.

## Claims

1. An airbag module (10) comprising an airbag (14) having an extended profile; a longitudinally extending structural member (16) positioned inside the airbag; and at least two mounting devices (12) for mounting the airbag module in position; **characterized in that** each mounting device comprises a first part (22) and a second part (24); each first part (22) being positioned inside the airbag and having a first portion (32) making a sliding fit on the structural member, and an upstanding portion (34) having a predefined shape; each second part (24) being positioned outside the airbag and having a first portion (36) with a slot (38) of predefined shape for receiving the upstanding portion and a portion (28) of the airbag in a tight fit, and a second portion (40) for mounting the airbag module.

2. An airbag module as claimed in Claim 1, wherein the structural member (16) is a gas tube for delivering inflation gas to the airbag (14) during deployment of the airbag.

3. An airbag module as claimed in Claim 1 or Claim 2, wherein the first portion (32) of the first part (22) of each mounting device is annular.

4. An airbag module as claimed in any one of Claims 1 to 3, wherein the upstanding portion (34) of the first part (22) of each mounting device (12), and the slot (38) of the first portion (36) of the second part (24) of each mounting device (12) are substantially T-shaped.

## Patentansprüche

1. Airbagmodul (10) mit einem Airbag (14), der ein längliches Profil aufweist; einem sich in Längsrichtung erstreckenden Konstruktionselement (16), das innerhalb des Airbags angeordnet ist; und mindestens zwei Montageeinrichtungen (12) zum Montieren des Airbagmoduls in seiner Position; **dadurch gekennzeichnet, dass** jede Montageeinrichtung einen ersten Teil (22) und einen zweiten Teil (24) umfasst; wobei jeder erste Teil (22) innerhalb des Airbags angeordnet ist und einen ersten Abschnitt (32), der einen Schiebesitz auf dem Konstruktionselement herstellt, und einen abstehenden Abschnitt (34) mit einer vordefinierten Form aufweist; und wobei jeder zweite Teil (24) außerhalb des Airbags angeordnet ist und einen ersten Abschnitt (36) mit einem Schlitz (38) mit einer vordefinierten Form zur Aufnahme des abstehenden Abschnittes und eines Abschnittes (28) des Airbags in einem engen Sitz, und einen zweiten Abschnitt (40) zum Montieren des Airbagmoduls aufweist.

2. Airbagmodul nach Anspruch 1, wobei das Konstruktionselement (16) ein Gasrohr zur Abgabe von Füllgas an den Airbag (14) während der Entfaltung des Airbags ist.

3. Airbagmodul nach Anspruch 1 oder Anspruch 2, wobei der erste Abschnitt (32) des ersten Teils (22) jeder Montageeinrichtung kreisringförmig ist.

4. Airbagmodul nach einem der Ansprüche 1 bis 3, wobei der abstehende Abschnitt (34) des ersten Teils (22) jeder Montageeinrichtung (12) und der Schlitz (38) des ersten Abschnittes (36) des zweiten Teils (24) jeder Montageeinrichtung (12) im Wesentlichen T-förmig sind.

## Revendications

1. Module de coussin de sécurité gonflable (10) comprenant un coussin de sécurité gonflable (14) ayant un profil allongé ; un élément structurel s'étendant longitudinalement (16) positionné à l'intérieur du coussin de sécurité gonflable ; et au moins deux dispositifs de montage (12) pour monter le module de coussin de sécurité en position ; **caractérisé en ce que** chaque dispositif de montage comprend une première pièce (22) et une deuxième pièce (24) ; chaque première pièce (22) étant positionnée à l'intérieur du coussin de sécurité gonflable et comportant une première partie (32) qui s'ajuste à coulissement sur l'élément structurel, et une partie verticale (34) de forme prédéfinie ; chaque deuxième pièce (24) étant positionnée à l'extérieur du coussin de sécurité gonflable et comportant une première partie (36), avec une fente (38) de forme prédéfinie pour recevoir la partie verticale et une partie (28) du coussin de sécurité gonflable dans un ajustement serré, et une deuxième partie (40) pour le montage du module de coussin de sécurité gonflable.

2. Module de coussin de sécurité gonflable selon la revendication 1, dans lequel l'élément structurel (16) est un tube à gaz pour la distribution de gaz de gonflage au coussin de sécurité gonflable (14) lors du déploiement du coussin de sécurité gonflable.

3. Module de coussin de sécurité gonflable selon la revendication 1 ou la revendication 2, dans lequel la première partie (32) de la première pièce (22) de chaque dispositif de montage est de forme annulaire.

4. Module de coussin de sécurité gonflable selon l'une quelconque des revendications 1 à 3, dans lequel la partie verticale (34) de la première pièce (22) de chaque dispositif de montage (12) et la fente (38) de la première partie (36) de la deuxième pièce (24) de chaque dispositif de montage (12) ont une forme sensiblement en T.
